# EUROPEAN PATENT SPECIFICATION

(11) **EP 1 659 590 B1**
(45) Date of publication and mention of the grant of the patent: **04.05.2011**
(21) Application number: 05024738.6
(22) Date of filing: 11.11.2005
(51) Int. Cl.: G11B 33/04, B65D 43/12, B65D 43/20

(54) **Box for gift objects**
Geschenkschachtel
Boîte à cadeaux

(30) Priority: 17.11.2004 IT MI20040517
(43) Date of publication of application: 24.05.2006
(73) Proprietor: BO.MI.SA. Bottoni Minuterie S.p.A., 20094 Assago MI (IT)
(72) Inventor: Brugia, Federico Silvano, 20143 Milano (IT); Corinaldi, Alessandro Alcide Gino Benvenuto, 20100 Milano (IT); Volontieri, Antonio, 20025 Legnano (MI) (IT)
(74) Representative: Ciceri, Fabio

(56) References cited:
- EP-A- 1 538 098
- WO-A-97/02569
- CH-A- 464 676
- US-A- 5 366 073
- US-A1- 2004 217 116

## Description

The present invention refers to a box, in particular a box for gift objects.

The field of boxes for gift objects is extremely vast, but presents several characteristics which are well known to all.
Normally, for the elegance which distinguishes them, in fact, the boxes for gift objects are often rather fragile and break very easily.

As everyday experience teaches, the connection of the cover to the base of the box is particularly fragile. By wear or breaking of the intentionally realised components, it may easily occur that the closing is not sufficient, or is entirely absent.

A known solution for a box for gift objects is described in US-A-2004/217116 upon which the preamble of claim 1 is based.

Object of the present invention is to realise a box for gift objects which has an elegant appearance, is easy to realise and which presents characteristics of high resistance to breaking and wear.

This object is achieved, according to the present invention, with a box having the characteristics mentioned in claim 1.

The invention is now described with reference to a preferred embodiment of a flat box, intended to contain memory CDs (music CDs, CD ROMs, DVDs....), nevertheless given only as an example and illustrated in the attached drawings, in which:
- figure 1 is a top perspective view of a box according to the invention;
- figure 2 is a front view of the box of figure 1;
- figure 3 is a partially exploded view of the box according to the invention, of which
- figure 4 is the section view of a detail of the base enclosed in point A of figure 3;
- figure 5 is the removed parts view of the element represented in figure 4; and
- figures 6 and 7 are details, in transverse section, of two different versions of the engagement between the cover and the base of the present invention.

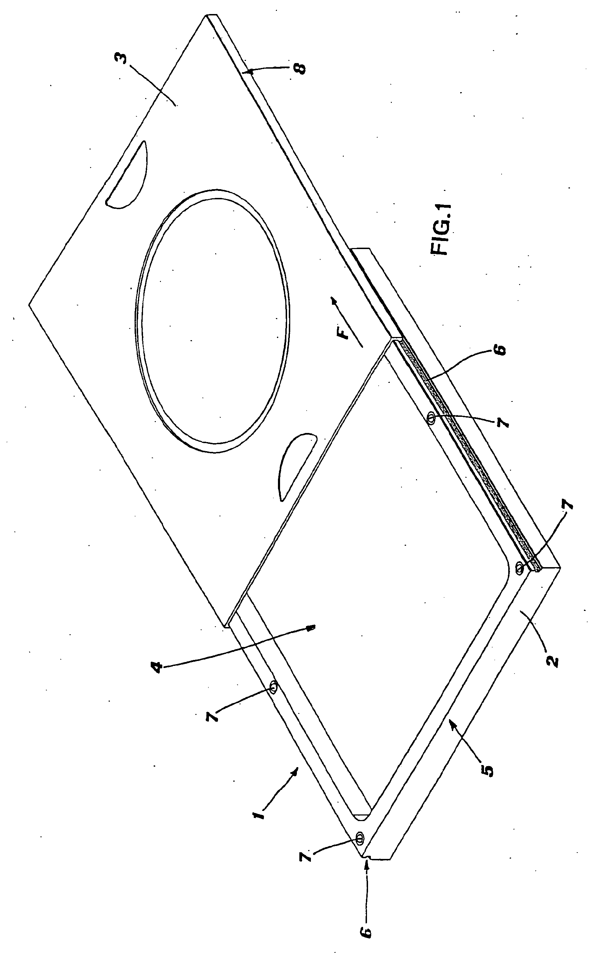

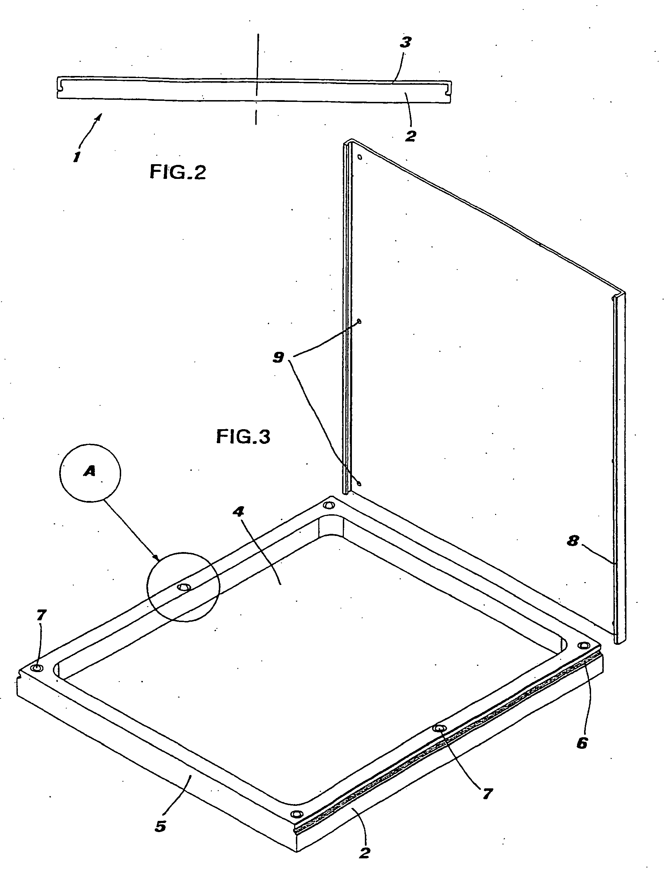

As illustrated in figures 1 and 2, the box 1 is composed of a base 2 and a free-sliding cover 3 associated with it.

The base 2 is composed by a bottom level 4, from whose perimeter there projects a wall 5, which in turn presents grooves 6 on two opposite sides. Along the upper border of these opposite sides of the wall 5, elastic retention 7 means are housed, comprising a sphere, driven by a spring, as better described below.

The cover 3 is equipped along two opposite sides with a perpendicular flap 8 whose edge is adapted to be engaged within a groove 6 formed on the two opposite sides of the base 2. Since the cover 3 is free to slide, the free edge of the perpendicular flap is engaged within said groove 6.

As may be observed in figure 3, slots 9 are present on the cover 3, spaced and aligned so that - when the box is closed - they are arranged at the spheres 7 in order to favour a stable engagement between the sphere 7 and the slot 9, once it is desired to close the box.

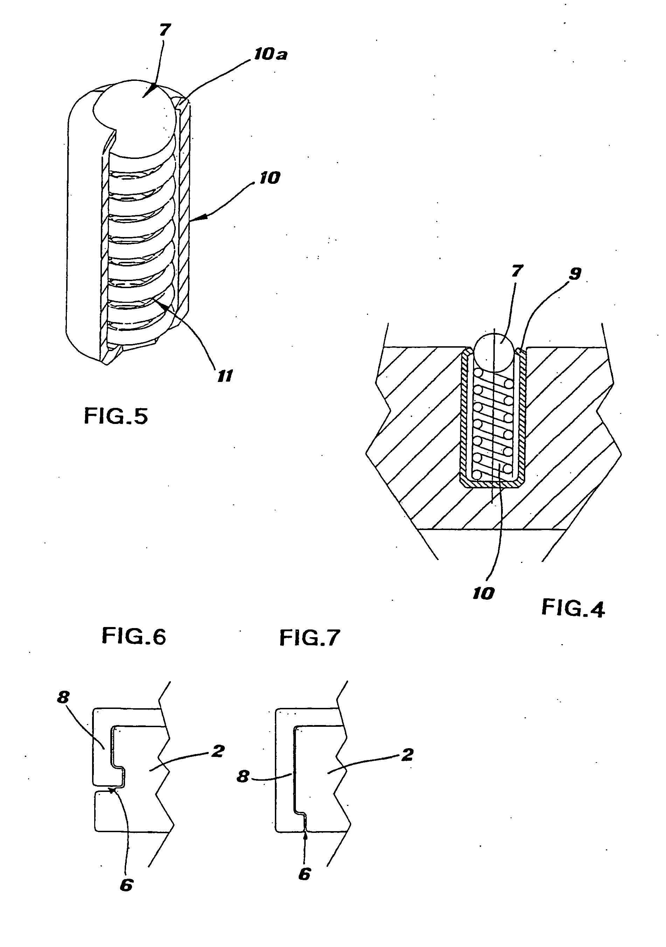

Each sphere 7, as observed in figures 4 and 5, is arranged in a precise housing 10, in turn set within the wall 5, and driven by a spring 11 against a small retention edge 10a, formed at the top of the housing 10. In such a manner, in closed cover configuration, when the sphere 7 is engaged in a slot 9, it excellently carries out the function of retention of the cover 3 for the time in which the box is held closed; on the other hand, it permits an easy opening - when only a light pressure is operated on the cover 3, in the direction indicated by the arrow F in figure 1 - because it disappears within the housing 10 thanks to the compliance of the spring 11.

There may be diverse constructive variants of this invention. For example, the grooves 6 may be arranged at mid-height on the wall 5 (as shown in figure 6), or simply removing a step portion of the bottom level of the base 2 (as shown in figure 7).

Likewise, the base 2 may be equipped with a mark of personalisation, obtained by extrusion or minting. This will permit identifying the product's provenance with elegance and precision, and simultaneously realising innovative and amusing boxes for gift objects.

Furthermore, the cover may be realised so that the slots are connected with each other by thin grooves forming rectilinear guides, parallel to the grooves 6; this evidently favours the sliding of the cover on the base, reducing the friction due to the engagement between the sphere and the cover.

Thus all of the predetermined objects are obtained. As may be easily understood, in fact, the box for gift objects thus realised is elegant, easy to realise and rather resistant to breaking and wear.

The box for gift objects thus formed moreover presents the characteristic of being constituted by extruded or minted material, which permits any type of personalisation, without departing in any manner from the scope of the present invention as defined by the appended claims.

## Claims

1. Box for gift objects (1) composed of a base (2) from whose perimeter project a wall (5) and a free-sliding cover (3) associated with it, at least said cover (3) is realised by extrusion or minting and that there are foreseen snap retention means (7) housed along the upper boarder of opposite sides of said wall (5), **characterised in that** said snap retention means (7) comprising spheres driven by a spring and cooperating with opposite seats (9) situated along the inner surface of said cover (3).

2. Box according to claim 1, in which said opposite seats are slots (9).

3. Box according to claim 2, **characterised in that** said slots (9) are connected by rectilinear guides.

4. Box as in any one of the preceding claims from 1 to 3, in which said base (2) is equipped with a mark of personalisation, obtained by extrusion or minting.

5. Box as in any one of the preceding claims, **characterised in that** said cover (3) is equipped, along two opposite sides, with a perpendicular flap (8), the free edges of said flap being engaged and guided within grooves (6) formed on two opposite sides of the base (2).

6. Box according to claim 5, in which said grooves (6) are formed at mid-height on the sides.

7. Box according to claim 5, in which said grooves (6) are formed by the simple removal of a step portion of the bottom level of the base (2).

## Patentansprüche

1. Behälter für Geschenkobjekte (1), bestehend aus einem Boden (2), aus dessen Umfang sich eine Wand (5) erstreckt, und einer dazugehörigen frei verschiebbaren Abdeckung (3), wobei zumindest die Abdeckung (3) durch Extrudieren oder Prägen hergestellt ist und Rastrückhaltemittel (7) vorgesehen sind, die entlang des oberen Randes von gegenüberliegenden Seiten der Wand (5) aufgenommen sind, **dadurch gekennzeichnet, daß** die Rastrückhaltemittel (7) federbelastete Kugeln umfassen, die mit gegenüberliegenden entlang der inneren Oberfläche der Abdeckung (3) angeordneten Aufnahmen (9) zusammenwirken.

2. Behälter nach Anspruch 1, bei welchem die gegenüberliegenden Aufnahmen Schlitze (9) sind.

3. Behälter nach Anspruch 2, **dadurch gekennzeichnet, daß** die Schlitze (9) durch gerade Führungen verbunden sind.

4. Behälter nach einem der vorhergehenden Ansprüche 1 bis 3, bei welchem der Boden (2) mit einem Zeichen zur Personalisierung, das durch Extrudieren oder Prägen erzeugt wurde, ausgestattet ist.

5. Behälter nach einem der vorhergehenden Ansprüche, **dadurch gekennzeichnet, daß** die Abdeckung (3) entlang zweier gegenüberliegender Seiten mit einer senkrechten Klappe (8) ausgestattet ist, wobei die freien Kanten der Klappe in Eingriff mit und geführt sind in Nuten (6), die auf zwei gegenüberliegenden Seiten des Bodens (2) ausgebildet sind.

6. Behälter nach Anspruch 5, bei welchem die Nuten (6) auf halber Höhe auf den Seiten ausgebildet sind.

7. Behälter nach Anspruch 5, bei welchem die Nuten (6) durch einfaches Entfernen eines treppenförmigen Abschnittes der unteren Ebene des Bodens (2) ausgebildet sind.

## Revendications

1. Boîte à cadeau (1) composée d'une base (2) du périmètre de laquelle se projette une paroi (5) et d'un couvercle coulissant librement (3) qui lui est associé, au moins ledit couvercle (3) est réalisé par extrusion ou frappe et il est prévu un moyen de rétention par pression (7) disposé le long du bord supérieur des côtés opposés de ladite paroi (5), **caractérisée en ce que** ledit moyen de rétention par pression (7) comprend des sphères entraînées par un ressort et coopérant avec des sièges opposés (9) situés le long de la surface intérieure dudit couvercle (3).

2. Boîte selon la revendication 1, dans laquelle lesdits sièges opposés sont des fentes (9).

3. Boîte selon la revendication 2, **caractérisée en ce que** lesdites fentes (9) sont connectées par des guides rectilignes.

4. Boîte selon l'une quelconque des revendications 1 à 3, dans laquelle ladite base (2) est munie d'une marque de personnalisation obtenue par extrusion ou frappe.

5. Boîte selon l'une quelconque des revendications précédentes, **caractérisée en ce que** ledit couvercle (3) est muni, le long de deux côtés opposés, d'un rabat perpendiculaire (8), les bords libres dudit rabat étant mis en prise et guidés à l'intérieur de rainures (6) formées sur deux côtés opposés de la base (2).

6. Boîte selon la revendication 5, dans laquelle lesdites rainures (6) sont formées à mi-hauteur sur les côtés.

7. Boîte selon la revendication 5, dans laquelle lesdites rainures (6) sont formées par le simple enlèvement d'une partie en escalier du niveau inférieur de la base (2).
